# EUROPEAN PATENT APPLICATION

(11) **EP 1 510 842 A1**
(43) Date of publication of application: **02.03.2005**
(21) Application number: 04011440.7
(22) Date of filing: 13.05.2004
(51) Int. Cl.: G02B 6/28, G02B 6/293, H04B 10/20

(54) **Optical interconnect system and method of communications over an optical backplane**

(30) Priority: 28.08.2003 US 652919
(71) Applicant: Agilent Technologies Inc, Palo Alto, CA 94306-2024 (US)
(72) Inventor: Windover, Lisa A., San Francisco CA 94123 (US); Simon, Jonathan, Castro Valley CA 94546 (US)
(74) Representative: Liesegang, Roland, Dr.

(57) **Abstract**

An optical interconnect system includes a plurality of optical circuit boards coupled to an optical backplane. An optical transmitter may be implemented with some or all of the plurality of optical circuit boards. Each optical transmitter is configured to transmit a multi-wavelength light signal. Each of a plurality of optical receivers are separately associated with the plurality of optical circuit boards. In accordance with one embodiment, one or more demultiplexing devices may be used to demultiplex multi-wavelength light signals to discrete wavelengths.

## Description

### BACKGROUND OF THE INVENTION

### 1. Field of the Invention.

The present invention relates to signal communications between the integrated circuits of separate electronic modules such as circuit boards, and more particularly to optical signal communications over an optical backplane which uses parallel optics or multi-wavelength optical communications, or both.

### 2. Discussion of the Related Art.

High speed electrical systems route many high speed electrical signals to multiple destinations having one or more integrated circuits (ICs) or processors which process the signals. Such destinations include the nodes of communication systems, circuit modules, circuit boards, and other such electronic systems or sub-systems. The electrical signals may be transmitted over an electrical backplane that allows the electrical signals to be broadcast to some or all possible destination circuit boards. A destination circuit board merely taps into the electrical backplane through an electrical bus to read the electrical signals. An electrical address may be used to determine whether an electrical signal is destined for a particular circuit board.

One area where there has been considerable need for high data rate or high speed communications is between parallel processors in computers. The parallel processors and associated memory of such parallel processing computers must be interconnected in a manner which allows data to flow at very high speeds between each of the processors, with low latency. High speed data transfer in networks has also become increasingly important due to the widespread proliferation of personal computers, and other such computer devices which need to be linked together.

Various system architectures for electrical communications between processors have been proposed to facilitate such high speed data flow and low latency. However, many of these optical interconnect devices and methods require rather extensive and complex timing and conflict resolution systems associated with the transmitters and receiver.

### SUMMARY OF THE INVENTION

An optical interconnect system in accordance with the invention includes a plurality of optical circuit boards coupled to an optical backplane. An optical transmitter may be implemented with some or all of the plurality of optical circuit boards. Each optical transmitter may be configured to transmit a multi-wavelength light signal. Each of a plurality of optical receivers may be separately associated with the plurality of optical circuit boards.

### BRIEF DESCRIPTION OF THE DRAWING

The above and other aspects, features and advantages of the present invention will become more apparent upon consideration of the following description of preferred embodiments taken in conjunction with the accompanying drawing figures, wherein:
Fig. 1 is a fragmentary perspective view of an optical backplane in accordance with one embodiment of the invention;
Fig. 2 is a rear view of the optical backplane of Fig.1;
Fig. 3 is a schematic diagram view of a typical coupling configuration between a demultiplexing unit of the optical backplane of Fig. 2, and the converter/transmitters and converter/receivers of Fig. 1;
Fig. 4 is a fragmentary perspective view of an optical backplane in accordance with an alternative embodiment of the invention;
Fig. 5 is a rear view of the optical backplane of Fig. 4; and
Fig. 6 is a schematic diagram view of a typical coupling configuration between a distribution unit of the optical backplane of Fig. 5, and the converter/transmitters and converter/receivers of Fig. 4.

### DETAILED DESCRIPTION OF THE PREFERRED EMBODIMENTS

In the following description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention.

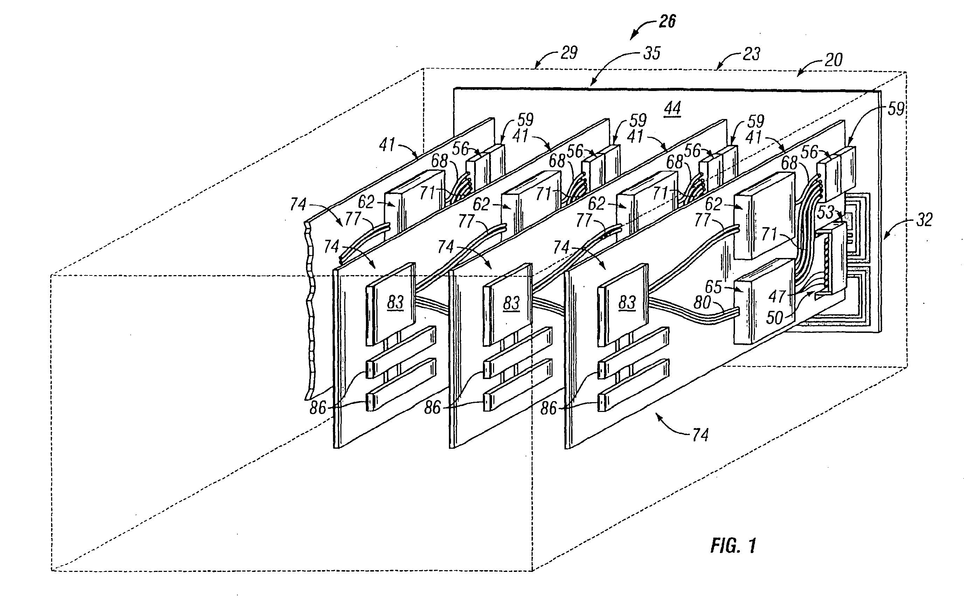

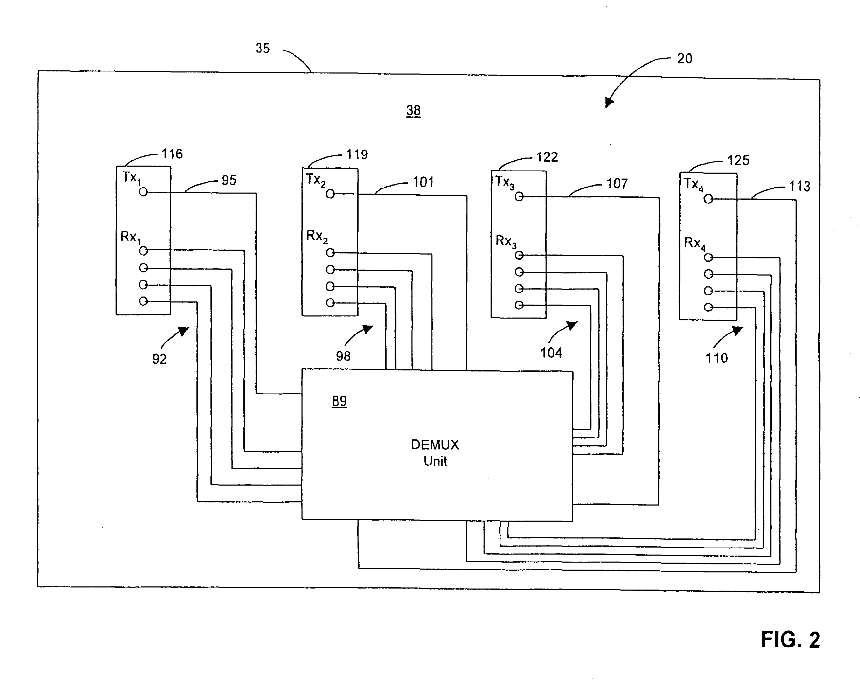

Figs. 1 and 2 are perspective and rear views, respectively, of optical backplane 20 configured as a component of electro-optical backplane 23 and electronic device 26. Electronic device 26 may generally include metal casing 29 (shown in dashed lines) housing electrical backplane 32 and connected electrical circuit board 35. Optical backplane 20 is coupled to rear surface 38 of circuit board 35, and a plurality of electro-optical circuit boards 41 are mounted to front surface 44 of circuit board 35. Circuit boards 41 may be disposed in a parallel, spaced-apart relationship within casing 29, extending perpendicularly from front surface 44. Circuit boards 41 may be connected to circuit board 35 using any suitable technique. As shown, each of the circuit boards 41 include a plurality of electrical contacts 47 at edge tab 50, and mating electrical backplane connector strips 53. If desired, circuit boards 41 may be operatively coupled to optical backplane 20 by optical connectors 56 and 59.

Circuit boards 41 may each include electrical-to-optical converter/transmitter 62 and optical-to-electrical converter/receiver 65. Converter/transmitter 62 is shown optically connected to optical connector 56 via single transmit fiber 68, while converter/receiver 65 is shown optically connected to optical connector 56 via a four-element fiber array 71.
Converter/transmitter 62 and converter/receiver 65 may be electrically connected to conventional electronic circuitry 74 by electrical traces 77 and 80, respectively. Electronic circuitry 74 may include devices such as integrated circuit processor 83 and memory chips 86, for example.

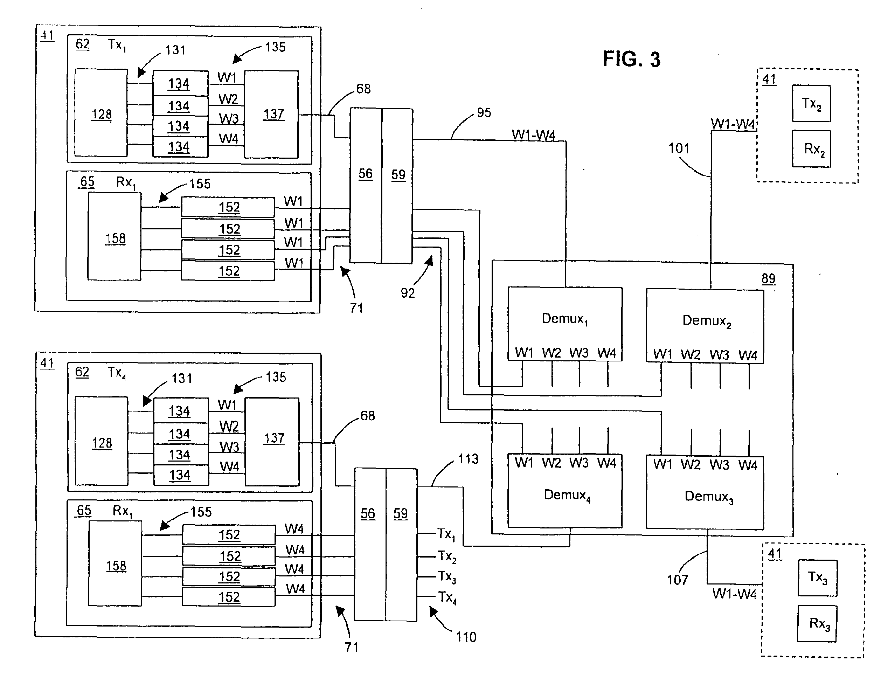

As shown in Fig. 2, optical backplane 20 includes demultiplexing unit 89 which is affixed to rear surface 38 of circuit board 35. As will be described in more detail with respect to Fig. 3, demultiplexing unit 89 includes individual demutiplexers that are each associated with the various converter/transmitters 62 and converter/receivers 65 configured with circuit boards 41. Demultiplexing unit 89 may be coupled to the various optical connectors 59 of circuit boards 41 using transmit fibers 95, 101, 107, and 113, and receiving fiber arrays 92, 98, 104, and 110. Each of these transmit fibers and receiving fiber arrays are shown extending through associated hole pairs 116, 119, 122, and 125 of the electrical circuit board. As shown, circuit boards 41 are optically interconnected by optical backplane 20, and electrically interconnected by electrical backplane 32 to permit high speed data communications between the various circuit boards 41.

Fig. 3 is a schematic view of a typical coupling configuration between demultiplexing unit 89 of optical backplane 20, and electrical-to-optical converter/transmitters 62 and optical-to-electrical converter/receivers 65. As shown in this figure, converter/transmitters 62 may include encoder 128, lasers 134, and wavelength division multiplexer 137. A vertical cavity surface emitting laser (VCSEL) is one particular type of laser that may be used for laser 134.

During operation, encoder 128 may receive electrical signals from electronic circuitry 74 (shown in Fig. 1), and then converts those electrical signals so that they may be communicated through a plurality of electrical conductors 131. For example, communicated electrical signals may be communicated as four discrete electrical drive signals and directed to associated lasers 134. Each laser may be configured to produce distinct wavelength beams of light, respectively labeled W1, W2, W3, and W4, and directed through associated optical fibers 135. In some embodiments, wavelength division multiplexer 137 combines the individual, multi-wavelength light beams W1-W4 so that these beams may be communicated to optical connectors 56 and 59 via a single transmit fiber 68. One reason for using a multi-wavelength transmit fiber is to reduce the number of transmit fibers required by each circuit board 41.

After passing through optical connectors 56 and 59, transmit fiber 95 directs the multi-wavelength beam of light to an associated demultiplexer of demultiplexing unit 89. The multi-wavelength beam of light may then be demultiplexed based upon wavelength, thus providing four discrete outputs, W1-W4. In this configuration, demultiplexer output at wavelength W1 is directed to converter/receiver 65, located at the first of four circuit boards 41. Similarly, demultiplexer outputs at wavelengths W2-W3 are directed to converter/receivers 65 that are respectively located at the second, third, and fourth circuit boards 41.

Each of the four demultiplexers of demultiplexing unit 89 are shown having an output at wavelength W1. Each of these four W1 wavelength outputs is directed by individual optical transmit fibers through optical connects 59 and 56 into converter/receivers 65 of circuit boards 41. It is to be understood that each of the four inputs of converter/receiver 65, at the first transmit/receive circuit board, has the same wavelength (W1).

Coupling the various transmitters and receivers of the four circuit boards in the manner depicted in Figs. 1-3 enables the system to track the origin or source of a received signal. For example, each of the four inputs (W1) of the first converter/receiver 65 may be associated with a particular transmitter. In particular, signals received at the topmost fiber on controller/receiver 65 (Rx₁) indicate that the source is the controller/transmitter of the first circuit board (Tx₁). Likewise, signals received at each of the remaining receiving fibers on Rx₁, in descending order, identify the source as being the transmitters (Tx₂, Tx₃, and Tx₄) of the second, third, and fourth circuit boards 41. The transmitting source of any signal received at any of the optical receiving fibers associated with Rx₁, Rx₂, Rx₃, and Rx₄ may be identified in similar fashion.

The received light may be fed into a suitable photodetector 152, such as a PIN photodetector array, which converts each individual optical signal into individual electrical signals that may be communicated to decoder 158 via electrical conductors 155. Decoder 158 is typically used to convert received electrical signals into suitable electrical signals useable by, for example, electronic circuitry 74 (Fig. 1).

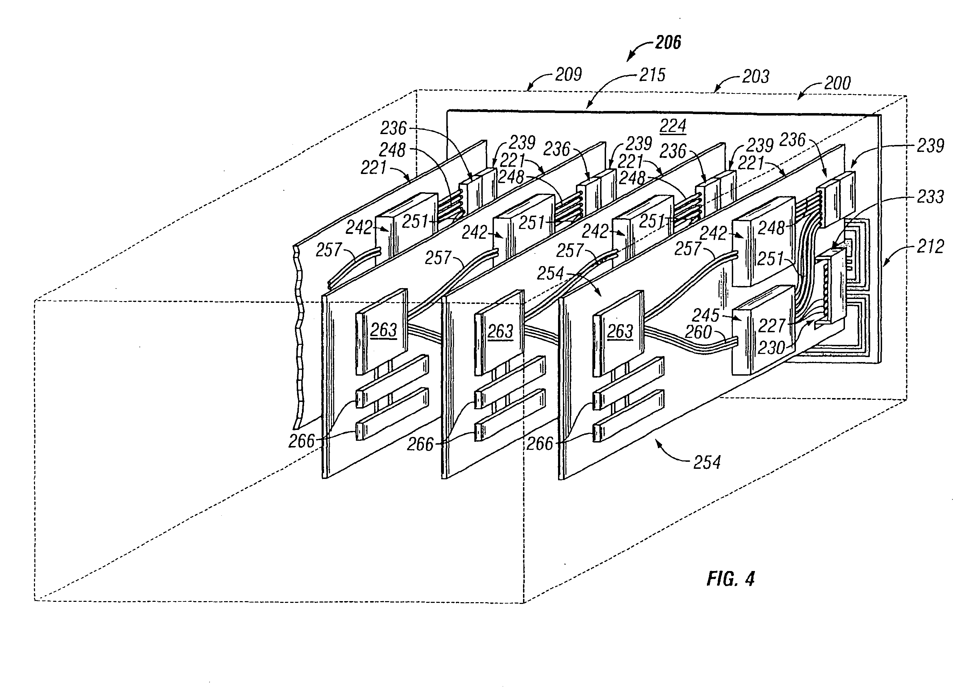

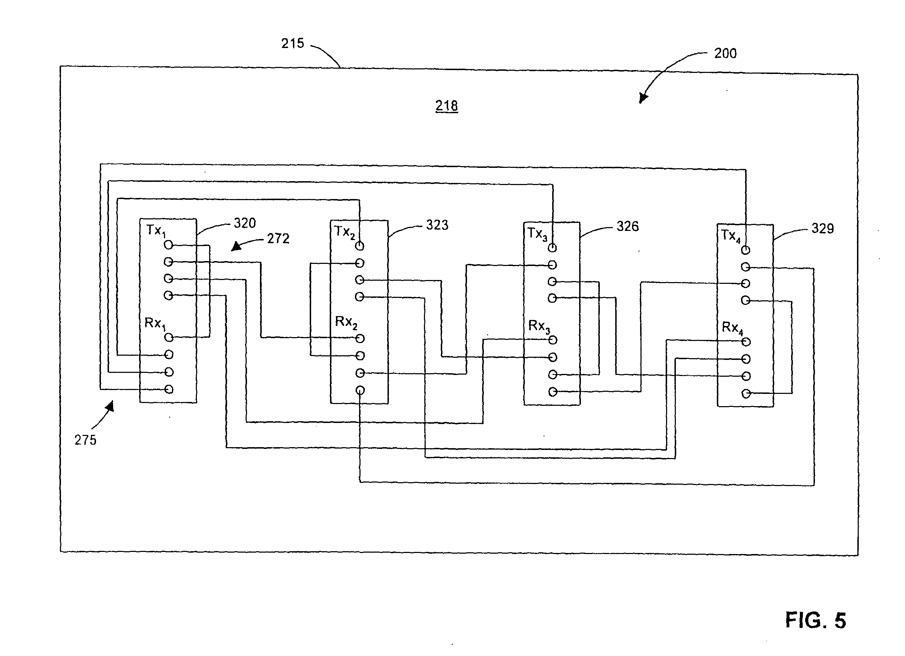

Figs. 4 and 5 show optical backplane 200 in accordance with an alternative embodiment of the invention. This particular embodiment may be generally defined as including multi-channel transmitters and receivers which may be configured to selectively perform point to point, multicast, or broadcast connections. In these figures, electronic device 206 may be formed with metal casing 209 (shown in dashed lines) housing electrical circuit board 215. Front surface 224 of the electrical circuit board includes electrical backplane 212, while the other side, rear surface 218, contains optical backplane 200.

A plurality of electro-optical circuit boards 221 are shown mounted to front surface 224 of the circuit board. Circuit boards 221 may be disposed in a spaced-apart relationship within casing 209, extending perpendicularly from front surface 224. Electro-optical circuit boards 221 may be connected to electrical circuit board 215 using any suitable technique. As shown, each of the electro-optical circuit boards 221 include a plurality of electrical contacts 227 at edge tab 230, and mating electrical backplane connector strips 233. In some embodiments, circuit boards 221 may be connected to optical backplane 200 using optical connectors 236 and 239.

Circuit boards 221 may each include electrical-to-optical converter/transmitter 242 and optical-to-electrical converter/receiver 245, which are shown optically connected to optical connector 236 with four optical transmit fibers 248 and four optical receiving fibers 251. If desired, converter/transmitter 242 and converter/receiver 245 may be electrically connected to conventional electronic circuitry 254 by respective electrical traces 257 and 260. Electronic circuitry 254 may include devices such as integrated circuit processor 263 and memory chips 266.

In Fig. 5, optical backplane 200 is shown having interfaces 320, 323, 326, and 329 that are respectively associated with the four circuit boards 221. Each interface is shown having four optical transmit fibers 272 and four optical receiving fibers 275. The optical transmit and receiving fibers provide an optical interconnect between circuit boards 221. For example, the first optical transmit fiber of the first transmitter is shown coupled to the first receiving portion of the first receiver (Rx₁). Similarly, the second, third, and fourth transmit fibers of the first transmitter (Tx₁) are respectively coupled to the first receiving portions of the second, third, and fourth receivers (Rx₂, Rx₃, and Rx₄). The remaining receivers and transmitters are shown connected in similar fashion.

Coupling the various transmitters and receivers of the four circuit boards in this manner permits the tracking of the origin or source of a received signal. For instance, each of the four circuit boards 221 is coupled to four distinct groupings of optical receiving fibers, identified in Fig. 5 as Rx₁, Rx₂, Rx₃, and Rx₄. Signals received at the topmost fiber on Rx₁ identify the source as being the transmitter of the first circuit board 221. Likewise, signals received at each of the remaining receiving fibers on Rx₁, in ascending order, identify the source as being the transmitters (Tx₂, Tx₃, and Tx₄) of the second, third, and four circuit boards 221. The transmitting source of any signal received at any of the optical receiving fibers associated with Rx₁, Rx₂, Rx₃, and Rx₄ may be identified in similar fashion.

The interconnection design depicted in Fig. 5 supports point to point, multicast, or broadcast communications. This may be accomplished by selectively transmitting on a single transmission channel, multiple transmission channels, or on all four channels. The multi-channel optical transmit and receive design will also be referred to as a parallel optics module. Of further note is that the illustrated interconnection design eliminates contention issues that may arise during signal communications. Accordingly, electro-optical circuit boards 221 may be optically interconnected by optical backplane 200, and electrically interconnected by electrical backplane 212, thus permitting high speed data communications between various circuit boards 221.

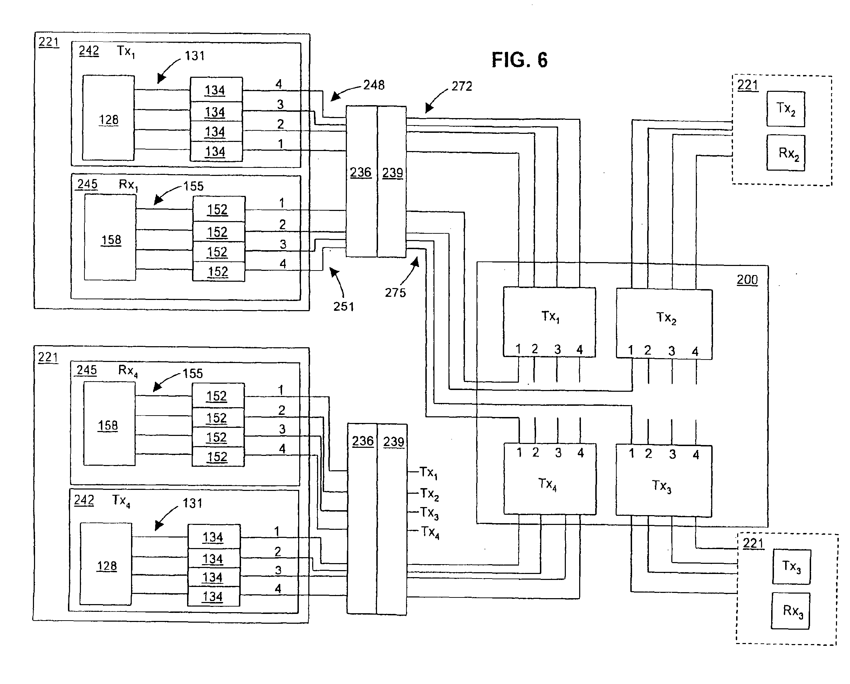

Fig. 6 is a schematic view of a typical coupling configuration between optical backplane 200, and the electrical-to-optical converter/transmitters 242 and optical-to-electrical converter/receivers 245 associated with the plurality of circuit boards 221. This figure will be described with occasional reference to components depicted in Figs. 4 and 5.

Similar to other embodiments, converter/transmitter 242 may include encoders 128 and associated lasers 134. However, in this embodiment, there is no need to vary the wavelength since each transmission channel has a dedicated optical transmission fiber. Recall that other embodiments multiplex a plurality of signals of varying wavelength onto a single optical transmission fiber.

During operation, encoder 128 may receive electrical signals from electronic circuitry 254 (shown in Fig. 4), and converts those electrical signals so that they may be communicated through a plurality of electrical conductors 131. For example, electrical signals may be communicated as four discrete electrical drive signals and directed to associated lasers 134. Each laser may be configured to produce a beam of light, which is directed through associated optical transmission fibers 248. The generated beams of light may then be directed through optical connectors 236 and 239.

After passing through optical connectors 236 and 239, optical transmit fibers 272 may be directed to optical backplane 200, where each of the individual fibers may be directed to the appropriate receiver using a multi-fiber ribbon cable, or other suitable fiber routing configuration. For example, in optical backplane 200, the first optical transmit fiber of the first transmitter (Tx₁) is shown coupled to the first receiving portion of the first converter/receiver 245 (Rx₁). Similarly, the first optical transmit fiber of the second, third, and fourth converter/transmitters 128 (Tx₂, Tx₃, and Tx₄) may be respectively coupled to the second, third, and fourth receiving portions of the first converter/receiver 245 (Rx₁). Note, the four inputs to the first converter/receiver 245 (Rx₁) all originate from the first channel of each transmitter (Tx₁, Tx₂, Tx₃, and Tx₄). Portions of the remaining receivers and transmitters have been omitted for clarity, but those of ordinary skill will understand that these components may be connected in similar fashion.

Referring still to Fig. 6, optical receiving fibers 275 may be directed through optical connectors 236 and 239 and into optical-to-electrical converter/receiver 245 (Rx₁) of a first electro-optic circuit board 221. Each of the four inputs may be passed into a suitable photodetector 152, which converts each individual optical signal into individual electrical signals. Typically, these electrical signals are communicated to decoder 158 via electrical conductors 155. If desired, decoder 158 may generate suitable electrical signals useable by electronic circuitry 254, as previously described (Fig. 4).

Although many embodiments of the invention have been described using lasers as the light sources, this is not a requirement and various other light sources such as LEDs with associated spectral filters may be used to produce the unique wavelengths for each transmitter. If desired, various control systems may be added for controlling the light wavelength, the transmitted light signals, the order of transmitting, and the order of receiving the transmitted light signals, as may be required for particular applications.

While the invention has been described in detail with reference to disclosed embodiments, various modifications within the scope of the invention will be apparent to those of ordinary skill in this technological field. It is to be appreciated that features described with respect to one embodiment typically may be applied to other embodiments. Therefore, the invention properly is to be construed with reference to the claims.

## Claims

1. An optical interconnect system for high speed communications comprising:
an optical backplane (20);
a plurality of optical circuit boards (41) coupled to said optical backplane;
at least one optical transmitter (62) operatively associated with separate ones of said plurality of optical circuit boards and being adapted for transmitting a multi-wavelength light signal;
a plurality of optical receivers (65), each operatively associated with separate ones of said plurality of optical circuit boards; and
at least one demultiplexing device (89) operatively associated with said at least one optical transmitter and said plurality of optical receivers, wherein said demultiplexing device is adapted to demultiplex said multi-wavelength light signals to discrete wavelengths, and selectively direct each discrete wavelength of said demultiplexed light signals to a particular one of said plurality of optical receivers.

2. The system according to claim 1, wherein:
said at least one optical transmitter comprises a plurality of optical transmitters, each operatively associated with separate optical circuit boards of said plurality of optical circuit boards, wherein each optical transmitter of said plurality of optical transmitters is adapted to transmit a multi-wavelength light signal.

3. The system according to claim 2, wherein:
said at least one demultiplexing device comprises a plurality of demultiplexing devices, each operatively associated with a particular optical transmitter of said plurality of said optical transmitters and each of said plurality of optical receivers, wherein each said demultiplexing device of said plurality of demultiplexing devices is adapted to demultiplex said multi-wavelength light signals to discrete wavelengths, and selectively direct each discrete wavelength of said demultiplexed light signal to one or more optical receivers of said plurality of optical receivers.

4. The system according to any of claims 1 to 3, wherein each of said at least one optical transmitters includes an encoder (128) and at least one light source (134), said at least one encoder being adapted to receive electrical output signals from a processor (83) of an associated optical circuit board and convert said electrical output signals into drive signals which cause said at least one light source to produce light signals at discrete wavelengths, wherein said light signals at said discrete wavelengths are multiplexed to form said multi-wavelength light signals.

5. The system according to any of claims 1 to 4, wherein each of said plurality of optical receivers includes a decoder (158) and at least one photodetector (152), said at least one photodetector being adapted to receive transmitted light signals and output a photodetector electrical signal to said decoder which converts said photodetector electrical signal into electrical signals useable by an associated one of said plurality of optical circuit boards.

6. A method for high speed communications between a plurality of optical circuit boards (41) coupled to an optical backplane (20), said method comprising:
optically coupling said optical circuit boards together through said optical backplane;
transmitting a multi-wavelength light signal using at least one optical transmitter (62);
demultiplexing said multi-wavelength light signal to discrete wavelengths; and
selectively directing each discrete wavelength of said demultiplexed light signals to a particular optical receiver (65) of a plurality of optical receivers.

7. The method according to claim 6, said method further comprising:
transmitting a plurality of multi-wavelength light signals using a plurality of optical transmitters (62), each of said plurality of optical transmitters operatively associated with separate ones of said plurality of optical circuit boards;
demultiplexing each of said plurality of multi-wavelength light signals to discrete wavelengths; and
selectively directing each discrete wavelength of said plurality of demultiplexed light signals to one or more of a plurality of optical receivers (65).

8. The method according to claim 6 or 7, said method further comprising:
automatically identifying a transmit source (62) of said multi-wavelength light signal based upon which input channel (71) said demultiplexed light signal is received on a particular optical receiver of said plurality of optical receivers.

9. The method according to any of claims 6 to 8, wherein each optical receiver of said plurality of optical receivers is associated with a particular wavelength of light, and wherein each optical transmitter of said at least one optical transmitter selectively controls which optical receiver of said plurality of optical receivers receives said demultiplexed light signals by transmitting at the particular wavelength of light associated with a particular optical receiver of said plurality of optical receivers.

10. An optical interconnect system for high speed communications comprising:
an optical backplane (200);
a plurality of optical circuit boards (221) coupled to said optical backplane;
an optical transmitter (242) operatively associated with at least one optical circuit board of said plurality of optical circuit boards and being adapted for transmitting a plurality of light signals using an associated plurality of optical transmit fibers (248);
a plurality of optical receivers (245), each operatively associated with separate optical circuit boards of said plurality of optical circuit boards; and
an optical coupling device (272) for selectively directing said plurality of light signals to each optical receiver of said plurality of optical receivers.

11. The system according to claim 10, said system further comprising:
a plurality of optical transmitters (242), each operatively associated with separate optical circuit boards of said plurality of optical circuit boards, wherein each optical transmitter of said plurality of optical transmitters is adapted to transmit a plurality of light signals.

12. The system according to claim 11, said system further comprising:
a plurality of optical coupling devices (272, 275), each optical coupling device operatively associated with a particular optical transmitter of said plurality of said optical transmitters and each optical receiver of said plurality of optical receivers, wherein each coupling device of said plurality of optical coupling devices is adapted to selectively direct said plurality of light signals to one or more optical receivers of said plurality of optical receivers.

13. A method for high speed communications between a plurality of optical circuit boards (221) coupled to an optical backplane (200), said method comprising:
optically coupling said optical circuit boards together through said optical backplane;
transmitting a plurality of light signals using an associated plurality of optical transmit fibers (248); and
selectively directing each light signal of said plurality of light signals to a particular optical receiver of a plurality of optical receivers (245).

14. The method according to claim 13, wherein:
transmitting a plurality of light signals using a plurality of optical transmitters (242), each optical transmitter of said plurality of optical transmitters being operatively associated with separate optical circuit boards of said plurality of optical circuit boards; and further comprising:
selectively directing said plurality of light signals to one or more optical receivers of a plurality of optical receivers (245).

15. The method according to claim 13 or 14, said method further comprising:
automatically identifying a transmit source (242) of said plurality of light signals based upon which input channel (251) one of said plurality of light signals is received on a particular optical receiver of said plurality of optical receivers.
